# Europäisches Patentamt
## European Patent Office
## Office européen des brevets

(19)

(11) Publication number: **0 048 520**
**B1**

(12)

# EUROPEAN PATENT SPECIFICATION

(45) Date of publication of patent specification: **29.05.85**

(51) Int. Cl.⁴: **B 07 B 4/06, B 07 B 9/02**

(21) Application number: **81201041.1**

(22) Date of filing: **16.09.81**

(54) Method for drying and size grading fly ash.

(30) Priority: **23.09.80 NL 8005301**

(43) Date of publication of application:
**31.03.82 Bulletin 82/13**

(45) Publication of the grant of the patent:
**29.05.85 Bulletin 85/22**

(84) Designated Contracting States:
**BE DE FR GB LU NL**

(56) References cited:
**DE-A-2 804 548**
**FR-A-2 160 528**
**FR-A-2 209 616**
**NL-A-6 500 554**
**US-A-4 029 572**

(73) Proprietor: **B.V. Winterswijksche Steen- en Kalkgroeve**
**Steengroeveweg 50**
**NL-7101 PH Winterswijk (NL)**

(72) Inventor: **Schoppers, Berend Willem**
**No. 18 Steengroeveweg**
**7101 PH Winterswijk (NL)**

(74) Representative: **Schumann, Bernard Herman Johan et al**
**OCTROOIBUREAU ARNOLD & SIEDSMA**
**Sweelinckplein 1**
**NL-2517 GK The Hague (NL)**

Courier Press, Leamington Spa, England.

# Description

The invention relates to a method for drying and grading according to grain size of powdery and/or granular raw material for preparing a fraction of the raw material with a particular grain size distribution, whereby the raw material is dried with a hot gas stream, and the fraction is separated.

Such a method is disclosed in NL—A—65.00554. According to this known method in a first operation granular mineral material is dried using a gas stream and subsequently in a second operation the dried material is graded in a sifting apparatus using the gas stream.

For constructing asphalt roads amongst other filler-containing material is used. This filler has to satisfy the requirements imposed by the public works ministry with respect to road construction materials. These requirements for fillers, as far as being relevant in the scope of this invention are as follows:

(1) the filler for asphalt mixtures should consist of a homogeneous powder obtained, as the case may be, by mixing two or more constituents;

(2) the filler should be free of lumps and must not contain parts exceeding 2 mms or foreign ingredients;

(3) the loss of weight by heating to 150°C may at the most be 1.5% by weight, which means that at any rate the filling substance must be dry;

(4) the bitumen absorption capacity, to be termed "strength" of the filler hereinafter in the case of "very weak filler", "weak filler"; and "medium filler" has to satisfy the relevant requirements according to which the absorption capacity for medium filler is higher than for weak filler and again higher for weak filler than for very weak filler.

The filler is termed stronger the higher is the bitumen absorption capacity. The filler termed "strong" (stronger than medium filler) has vanished from the set of requirements of the public works ministry for construction material, probably because this strong filler is only used for perparing medium filler by mixing with weak or very weak filler. It is therefore sufficient to impose the requirements for medium filler.

A very satisfactorily usable and adequately obtainable filling substance is fly ash which contains a sufficient amount of combustible constituents to bind more, preferably much more bitument than is prescribed for medium filler. It has been found that there is an intimate correlation between the amount of combustible constiuents of fly ash and the capacity of binding bitumen.

As a result of the improved firing techniques the amount of combustible constituents of fly ash of all fly-ash producing industries has decreased to an extent such that modern fly ash is no longer suitable for preparing medium filler by mixing it as a strong filler with a weak filler.

However, in the past large quantities of fly ash have been stored, for example, in pits, which contain sufficient amounts of combustible constituents to be suitable for preparing medium filler. However, this fly-ash is wet and has, therefore, to be dried. Moreover, the fly ash contains many impurities, for example lumps, earth, stones, pieces of metal, glass, ceramic, larger ash particles and so on.

This invention has for its object to provide a new method for drying and grading moist fly-ash in a single, simple and inexpensive unit operation, in which according to the invention as raw material moist fly-ash is used, that the fly-ash is solely graded by the hot gas stream, and that thereto the moist fly-ash is brought into contact with the gas stream in a counter current fashion, whereas on separation a dry fine fraction of the fly-ash is co-current with the gas stream carrying and removing the fine fraction, and a dry heavy fraction of the fly-ash is counter current to the hot gas stream.

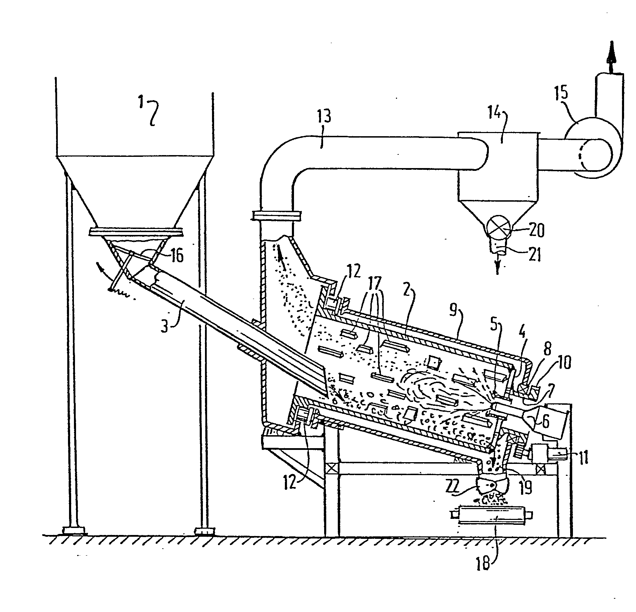

The invention will be explained with reference to the accompanying drawing.

The drawing shows an elevational view, partly broken away, of a device forming the method according to the invention.

This device comprises various parts to be mentioned hereinbelow. A bunker 1 for moist fly ash and an inclined rotatably drivable drum 2 adjoining at its higher end i.e. on the left-hand side in the drawing through a supply tube 3 the bunker 1 are provided. Near the outlet opening of the bunker 1 is provided a spring-loaded flap 16 preventing random suction of raw material.

The supply tube 3 opens out in the drum 2 in the region of its open end. The other end of the drum is also largely open and has a plurality of spokes 4. The spokes 4 are connected at one end with the jacket of the drum and at the other end with a ring 5, through which a burner 6 opens out in the interior of the drum. The spokes 4 are furthermore rigidly coupled with a coaxial sleeve 7, which serves to hold by a bearing 8 a tube 9 of the rotatable drum 12. The sleeve has furthermore a toothed crown 10, which serves for rotatably driving the drum 2 by means of a motor 11. The higher open end of the drum 2 is carried by supporting rollers 12. The housing 9 adjoins in substantially sealing relationship a suction duct 13, through the wall of which is passed the supply tube 3. In the suction duct 13 is included a cyclone 14 for removing the smaller particles, as well as a suction ventilator 15.

The inner wall of the drum 2 is provided with at least substantially radially extending blades 17.

The device shown in the drawing operates as follows:

The motor 11 rotatably drives the drum 2. The burner 6 is operating; the suction ventilator 15 produces a continual gas stream through the drum. Through the spring-loaded flap 16 moist fly ash is admitted through the supply tube 3 into the drum 2. Owing to the presence of hot gases in the drum 2 by the action of the burner 6 the moist fly ash is dried, but it is in a partly fluidized, partly floating state dependent upon the grain size. The lighter particles i.e. having a smaller grain size are conducted away through the suction duct 13, whereas the heavier particles are gradually conveyed downwards via the rotating drum wall and finally they are transferred along the spokes 4 to a conveyor belt 18 through a coarse particle outlet 19 having a swinging flap 22 in the housing 9. The finer fly ash particles sucked away through the duct 13 are collected by the cyclone and can be periodically removed by actuating a flap 20 through a fine particle outlet 21.

It will be obvious that in the present embodiment in which the fly ash is dried and graded according to grain size the useful smaller particles can be collected from the outlet opening 21. By manipulating the suction force of the suction ventilator 15 grading according to grain size can be adjusted to a desired value, for example, to a grain size of about 2 mms.

The invention is not limited to the embodiment described above. For example, the burner may be disposed at a different place in the air supply and instead of using a suction ventilator there may be employed a blowing ventilator on the other side of the system. The invention encompasses also an embodiment in which the heavier particles at the opening 19 constitute the main constituent.

### Claim

A method for drying and grading according to grain size of powdery and/or granular raw material for preparing a fraction of the raw material with a particular grain size distribution, whereby the raw material is dried with a hot gas stream, and the fraction is separated, characterized in that as raw material moist fly-ash is used, that the fly-ash is solely graded by the hot gas stream, and that thereto the moist fly-ash is brought into contact with the gas stream in a counter current fashion, whereas on separation a dry fine fraction of the fly-ash is co-current with the gas stream carrying and removing the fine fraction, and a dry heavy fraction of the fly-ash is counter current to the hot gas stream.

### Revendication

Procédé pour sécher et trier en fonction de la dimension de grain, une matière brute en poudre et/ou en grains pour préparer une fraction de la matière brute avec une répartition particulière de la dimension de grain, grâce auquel la matière brute est séchée avec un courant de gaz chaud, et la fraction est séparée, procédé caractérisé en ce qu'on utilise comme matière brute de la cendre volante mouillée, cette cendre volante étant triée seulement par le courant de gaz chaud, la cendre volante mouillée étant amenée en contact avec le courant de gaz, à contre-courant, tandis que lors de la séparation une fraction fine sèche de la cendre volante s'écoule conjointement avec le courant de gaz transportant et extrayant la fraction fine, et une fraction lourde sèche de la cendre volante s'écoule à contre-courant par rapport au courant de gaz chaud.

### Patentanspruch

Verfahren zum Trocknen und Klassieren nach Korngröße von pulverförmigen und/oder körmigem Ausgangsmaterial zur Gewinnung einer Fraktion des Ausgangsmaterials mit bestimmter Korngrößenverteilung, bei dem das Ausgangsmaterial mit einem heißen Gasstrom getrocknet und die Fraktion abgetrennt wird, dadurch gekennzeichnet, daß als Ausgangsmaterial feuchte Flugasche verwendet wird, daß die Flugasche ausschließlich durch den heißen Gasstrom klassiert wird und daß zu diesem Zweck die feuchte Flugasche im Gegenstrom mit dem Gasstrom in Kontakt gebracht wird, wobei nach der Abtrennung eine trockene, feine Flugasche-Fraktion in gleicher Richtung mit dem die feine Fraktion tragenden und entfernenden Gasstrom abgetragen und ein trockene, schwere Flugasche-Fraktion im Gegenstrom zu dem Gasstrom geführt wird.